# EUROPÄISCHE PATENTSCHRIFT

(11) **EP 3 453 595 B1**
(45) Veröffentlichungstag und Bekanntmachung des Hinweises auf die Patenterteilung: **09.09.2020**
(21) Anmeldenummer: 18189924.6
(22) Anmeldetag: 21.08.2018
(51) Int. Cl.: B62D 15/02, G01S 15/93

(54) **VERFAHREN ZUM CHARAKTERISIEREN EINER VON ZWEI OBJEKTEN BEGRENZTEN PARKLÜCKE FÜR EIN KRAFTFAHRZEUG, PARKASSISTENZSYSTEM SOWIE KRAFTFAHRZEUG**
METHOD FOR CHARACTERISING A PARKING SPACE FOR A MOTOR VEHICLE DELIMITED BY TWO OBJECTS, PARKING ASSISTANCE SYSTEM AND MOTOR VEHICLE
PROCÉDÉ DE CARACTÉRISATION D'UN ESPACE DE STATIONNEMENT POUR UN VÉHICULE AUTOMOBILE DÉLIMITÉ PAR DEUX OBJETS, SYSTÈME D'AIDE AU STATIONNEMENT AINSI QUE VÉHICULE AUTOMOBILE

(30) Priorität: 08.09.2017 DE 102017120765
(43) Veröffentlichungstag der Anmeldung: 13.03.2019
(73) Patentinhaber: Valeo Schalter und Sensoren GmbH, 74321 Bietigheim-Bissingen (DE)
(72) Erfinder: Bulliot, Mathieu, 74321 Bietigheim-Bissingen (DE); Szczytowski, Piotr, 74321 Bietigheim-Bissingen (DE); Schwalb, Tobias, 74321 Bietigheim-Bissingen (DE); Bariant, Jean-Francois, 74321 Bietigheim-Bissingen (DE); Kreibich, Manuel, 74321 Bietigheim-Bissingen (DE)
(74) Vertreter: Pothmann, Karsten

(56) Entgegenhaltungen:
- DE-A1-102013 103 569
- JP-A- 2002 228 734

## Beschreibung

Die Erfindung betrifft ein Verfahren zum Charakterisieren einer von zwei Objekten begrenzten Parklücke für ein Kraftfahrzeug, bei welchem mittels einer Sensoreinrichtung des Kraftfahrzeugs Konturpunkte der Objekte während einer Vorbeifahrt des Kraftfahrzeugs an der Parklücke erfasst werden und anhand der Konturpunkte eine Orientierung der Parklücke relativ zum Kraftfahrzeug bestimmt wird. Die Erfindung betrifft außerdem ein Parkassistenzsystem sowie ein Kraftfahrzeug.

Es ist bereits aus dem Stand der Technik bekannt, Parkassistenzsysteme für Kraftfahrzeuge bereitzustellen, welche einen Fahrer des Kraftfahrzeugs bei Parkvorgängen unterstützen können. Beispielsweise kann das Kraftfahrzeug zum Unterstützen des Fahrers durch das Parkassistenzsystem zumindest semi-autonom in eine Parklücke eingeparkt werden. Beim semi-autonomen Manövrieren übernimmt das Parkassistenzsystem des Kraftfahrzeugs eine Lenkung des Kraftfahrzeugs, während ein Fahrer des Kraftfahrzeugs das Gaspedal sowie die Bremse des Kraftfahrzeugs betätigt. Beim autonomen beziehungsweise vollautonomen Manövrieren betätigt das Parkassistenzsystem zusätzlich zu der Lenkung auch das Gaspedal, die Bremse sowie die Gangschaltung, sodass das Kraftfahrzeug automatisch gelenkt, beschleunigt und abgebremst wird.

Um das Kraftfahrzeug dabei beschädigungsfrei einparken zu können, wird die Parklücke üblicherweise charakterisiert, beispielsweise indem eine Orientierung der Parklücke bestimmt wird. Dazu ist aus der DE 10 2009 028 251 A1 ein Verfahren zum unterstützten Einparken in eine Parklücke bekannt. Dabei wird das Fahrzeug entlang eines ersten Abschnittes einer Einparktrajektorie bis zu einem Zwischenpunkt geführt. An dem Zwischenpunkt wird erkannt, ob die Parklücke als Parallelparklücke oder als Diagonalparklücke ausgeführt ist. Dann wird das Fahrzeug entlang eines zweiten Abschnittes der Einparktrajektorie geführt, wobei der zweite Abschnitt so gewählt wird, dass das Fahrzeug in Abhängigkeit von dem Vorliegen einer Parallelparklücke oder einer Diagonalparklücke geführt wird.

In der DE 10 2011 113 916 A1 ist ein Verfahren zur Klassifikation von Parkszenarien für ein Parkassistenzsystem eines Kraftfahrzeugs beschrieben. Dabei ist eine vorgegebene Anzahl von Parkszenarien beschrieben, wobei jedes Parkszenario auf zumindest einem parklückenspezifischen Parameter basiert. Dabei werden Daten des Umfeldes des Kraftfahrzeugs mittels einer Umfeldsensorik bestimmt und der zumindest eine parklückenspezifische Parameter aus den Umfelddaten bestimmt. Dann wird anhand des zumindest einen parklückenspezifischen Parameters das Parkszenario klassifiziert.

Die DE 10 2013 103 569 A1 offenbart eine Parkplatzerfassungsvorrichtung, bei welcher Konturpunkte von zwei parallel geparkten Fahrzeugen, zwischen welchen sich ein Parkplatz befindet, bestimmt werden. Basierend auf den Konturpunkten werden Eckpunkte der geparkten Fahrzeuge berechnet, anhand derer der Parkplatz erfasst wird. Dabei wird davon ausgegangen, dass die Fahrzeuge parallel geparkt sind. Falls dies nicht der Fall ist, wird während der Fahrt des Kraftfahrzeugs auf den Parkplatz eine Platzkorrekturverarbeitung durchgeführt. Daraus ergibt sich der Nachteil, dass die tatsächliche Orientierung des Parkplatzes erst erfasst wird, wenn das Kraftfahrzeug den Einparkvorgang, also die Fahrt auf den Parkplatz, bereits begonnen hat. Dabei kann es vorkommen, dass der Einparkvorgang abgebrochen werden muss, falls beispielsweise während der Fahrt auf den Parkplatz festgestellt wurde, dass die Orientierung des Parkplatzes ungeeignet für das Kraftfahrzeug ist. Weiterhin offenbart die DE 10 2013 103 569 A1 ein Verfahren gemäß dem Oberbegriff des Patenanspruchs 1.

Die JP 2002 228734 A offenbart eine weitere Parkplatzerfassungsvorrichtung.

Es ist Aufgabe der vorliegenden Erfindung, eine Lösung bereitzustellen, wie eine Orientierung einer Parklücke in einem Umgebungsbereich eines Kraftfahrzeugs besonders genau bestimmt werden kann, um die Parklücke zuverlässig charakterisieren zu können.

Diese Aufgabe wird erfindungsgemäß durch ein Verfahren, durch ein Parkassistenzsystem sowie durch ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.

Gemäß einer Ausführungsform eines Verfahrens zum Charakterisieren einer von zwei Objekten begrenzten Parklücke für ein Kraftfahrzeug werden mittels einer Sensoreinrichtung des Kraftfahrzeugs Konturpunkte der Objekte während einer Vorbeifahrt des Kraftfahrzeugs an der Parklücke erfasst und anhand der Konturpunkte wird eine Orientierung der Parklücke relativ zum Kraftfahrzeug bestimmt. Insbesondere werden bei einem ersten der Objekte erste Konturpunkte an einer der Parklücke zugewandten und sich entlang einer Tiefenrichtung der Parklücke erstreckenden Innenseite und/oder an einer der Parklücke abgewandten und sich entlang der Tiefenrichtung der Parklücke erstreckenden Außenseite erfasst und anhand der ersten Konturpunkte wird eine erste Konturlinie bestimmt. Bei einem zweiten der Objekte werden insbesondere zweite Konturpunkte an einer der Parklücke abgewandten und sich entlang der Tiefenrichtung der Parklücke erstreckenden Außenseite und/oder an einer der Parklücke zugewandten und sich entlang der Tiefenrichtung der Parklücke erstreckenden Innenseite erfasst und anhand der zweiten Konturpunkte wird eine zweite Konturlinie bestimmt. Anhand einer Orientierung der ersten Konturlinie und der zweiten Konturlinie kann die Orientierung der Parklücke bestimmt werden.

Gemäß einer bevorzugten Ausführungsform eines Verfahrens zum Charakterisieren einer von zwei Objekten begrenzten Parklücke für ein Kraftfahrzeug werden mittels einer Sensoreinrichtung des Kraftfahrzeugs Konturpunkte der Objekte während einer Vorbeifahrt des Kraftfahrzeugs an der Parklücke erfasst und anhand der Konturpunkte wird eine Orientierung der Parklücke relativ zum Kraftfahrzeug bestimmt. Darüber hinaus werden bei einem ersten der Objekte erste Konturpunkte an einer der Parklücke zugewandten und sich entlang einer Tiefenrichtung der Parklücke erstreckenden Innenseite und/oder an einer der Parklücke abgewandten und sich entlang der Tiefenrichtung der Parklücke erstreckenden Außenseite erfasst und anhand der ersten Konturpunkte wird eine erste Konturlinie bestimmt. Bei einem zweiten der Objekte werden zweite Konturpunkte an einer der Parklücke abgewandten und sich entlang der Tiefenrichtung der Parklücke erstreckenden Außenseite und/oder an einer der Parklücke zugewandten und sich entlang der Tiefenrichtung der Parklücke erstreckenden Innenseite erfasst und anhand der zweiten Konturpunkte wird eine zweite Konturlinie bestimmt. Anhand einer Orientierung der ersten Konturlinie und der zweiten Konturlinie wird die Orientierung der Parklücke bestimmt.

Mittels des Verfahrens kann ein Parkassistenzsystem für das Kraftfahrzeug realisiert werden, durch welches ein Fahrer des Kraftfahrzeugs beim Einparken in eine Parklücke unterstützt werden kann. Dazu wird die Parklücke charakterisiert, indem die Orientierung der Parklücke relativ zum Kraftfahrzeug bestimmt wird. Unter der Orientierung der Parklücke sind hier insbesondere eine Art der Parklücke, durch welche eine Fahrzeugaufstellung des Kraftfahrzeugs in der Parklücke bestimmt wird, sowie eine Form der Parklücke zu verstehen. Die Orientierung wird dabei insbesondere anhand einer Orientierung von sich entlang der Tiefenrichtung der Parklücke erstreckenden, einander gegenüberliegenden Seitenbegrenzungen der Parklücke bestimmt.

Die Parklücke, welche durch die zwei Objekte begrenzt ist, kann dabei beispielsweise als eine Querparklücke, eine Schrägparklücke oder eine Längsparklücke ausgebildet sein. Die zwei Objekte sind insbesondere zwei parkende Kraftfahrzeuge, zwischen welchen sich die Parklücke befindet. In einer als Querparklücke ausgebildeten Parklücke weist das Kraftfahrzeug eine Senkrechtaufstellung als die Fahrzeugaufstellung auf, in einer als Schrägparklücke ausgebildeten Parklücke weist das Kraftfahrzeug eine Schrägsaufstellung als die Fahrzeugaufstellung auf und in einer als Längsparklücke ausgebildeten Parklücke weist das Kraftfahrzeug eine Längsaufstellung als die Fahrzeugaufstellung auf. Die Form der Parklücke kann im Falle von parallel zueinander positionierten, parklückenbegrenzenden Objekte eine rechteckige Form aufweisen. Im Falle von schräg zueinander positionierten, parklückenbegrenzenden Objekten kann die Form der Parklücke beispielsweise trapezförmig sein. Dies kann beispielsweise vorkommen, wenn ein geparktes Kraftfahrzeug schräg abgestellt ist, und dadurch die Parklücke beispielsweise entlang der Tiefenrichtung verjüngt ist. Dabei weist jedes der Objekte eine Außenseite, welche einen der Parklücke abgewandten Oberflächenbereich des Objektes repräsentiert, und eine Innenseite, welche einen der Parklücke zugewandten Oberflächenbereich des Objektes repräsentiert, auf. Die Innenseiten der Objekte entsprechen dabei den Seitenbegrenzungen der Parklücke. Die Innenseiten und Außenseiten erstrecken sich dabei entlang der Tiefenrichtung. Anders ausgedrückt erstrecken sich Innenseiten und Außenseiten über eine Tiefe der Parklücke. Dabei müssen die Innenseiten und Außenseiten nicht parallel zu der Tiefenrichtung orientiert sein, sondern können auch schräg zu der Tiefenrichtung orientiert sein. Im Falle einer Querparklücke oder einer Schrägparklücke, welche durch zwei parkende Kraftfahrzeuge begrenzt ist, werden die Außenseiten und die Innenseiten durch Seitenbereiche der parkenden Kraftfahrzeuge gebildet. Im Falle einer Längsparklücke, welche durch zwei parkende Kraftfahrzeuge begrenzt ist, werden die Außenseiten und die Innenseiten durch Heckbereiche bzw. Frontbereiche der parkenden Kraftfahrzeuge gebildet.

Die Parklücke wird dabei anhand der parklückenbegrenzenden Objekte charakterisiert. Dazu werden die Konturpunkte auf sich entlang der Tiefenrichtung erstreckenden Oberflächenbereichen der Objekte mittels Sensordaten der Sensoreinrichtung erfasst. Die Sensoreinrichtung weist insbesondere eine hohe Detektionsreichweite auf. Vorzugsweise werden die Konturpunkte mittels zumindest eines Radarsensors und/oder zumindest eines Lidar-Sensors und/oder zumindest einer Kamera der Sensoreinrichtung des Kraftfahrzeugs erfasst. Durch eine Sensoreinrichtung aufweisend einen Radarsensor und/oder einen Lidar-Sensor, beispielsweise einen Laserscanner, und/oder eine Kamera können in vorteilhafter Weise detaillierte Informationen über die Objekte gewonnen werden, da solche Sensoren insbesondere eine hohe Detektionsreichweite aufweisen. Die Konturpunkte repräsentieren dabei beispielsweise sich auf der Oberfläche der Objekte befindliche Reflexionspunkte eines von der Sensoreinrichtung aus dem Umgebungsbereich empfangenen Sensorsignals. Jedem Konturpunkte kann dabei ein räumlicher Lagewert bzw. Positionswert zugeordnet werden, welcher einen Abstand sowie eine Orientierung des Reflexionspunktes auf dem jeweiligen Oberflächenbereich der Objekte zu dem Kraftfahrzeug repräsentiert.

In einem ersten Fall können bei dem ersten Objekt die ersten Konturpunkte auf dem die Innenseite des ersten Objektes ausbildenden Oberflächenbereich und bei dem zweiten Objekt die zweiten Konturpunkte auf dem die Innenseite des zweiten Objektes ausbildenden Oberflächenbereich erfasst werden. Hier werden also bei beiden Objekten die Innenseiten erfasst. Dabei blickt die Sensoreinrichtung des Kraftfahrzeugs in die Parklücke hinein und erfasst dabei die ersten und zweiten Konturpunkte der Objekte. Anhand der ersten Konturpunkte kann, beispielsweise mittels Ausgleichsrechnung, die erste Konturlinie bestimmt werden, welche sowohl die Innenseite des ersten Objektes als auch eine erste der Seitenbegrenzungen der Parklücke repräsentiert. Anhand der zweiten Konturpunkte kann, beispielsweise mittels Ausgleichsrechnung, die zweite Konturlinie bestimmt werden, welche sowohl die Innenseite des zweiten Objektes als auch eine zweite der Seitenbegrenzungen der Parklücke repräsentiert. Aus der Erfassung der Innenseiten der Objekte ergibt sich der Vorteil, dass die Orientierungen der Seitenbegrenzungen der Parklücke direkt bestimmt werden können.

In einem zweiten Fall können bei dem einem Objekt die Innenseite und bei dem anderen Objekt die Außenseite erfasst werden. Beispielsweise können bei dem ersten Objekt die ersten Konturpunkte auf dem die Innenseite des ersten Objektes ausbildenden Oberflächenbereich erfasst werden. Dabei blickt die Sensoreinrichtung des Kraftfahrzeugs in die Parklücke hinein und erfasst dabei die ersten Konturpunkte des ersten Objektes. Anhand dieser ersten Konturpunkte kann, beispielsweise mittels Ausgleichsrechnung, die erste Konturlinie bestimmt werden, welche sowohl die Innenseite des ersten Objektes als auch die erste Seitenbegrenzung der Parklücke repräsentiert. Bei dem zweiten Objekt werden die zweiten Konturpunkte auf der Außenseite des zweiten Objektes erfasst. Anhand dieser zweiten Konturpunkte kann, beispielsweise mittels Ausgleichsrechnung, die zweite Konturlinie bestimmt werden. Die zweite Konturlinie repräsentiert somit die Außenseite des zweiten Objektes und erstreckt sich entlang der Tiefenrichtung der Parklücke. Anhand der Orientierung der zweiten Konturlinie kann dabei auf die Orientierung der zweiten Seitenbegrenzung der Parklücke geschlossen werden. Hier wird insbesondere nämlich davon ausgegangen, dass die Außenseite des zweiten Objektes in etwa parallel zu der Innenseite des zweiten Objektes orientiert ist, wobei die Innenseite des zweiten Objektes die zweite Seitenbegrenzung der Parklücke repräsentiert. Ebenso können bei dem ersten Objekt die ersten Konturpunkte auf dem die Außenseite des ersten Objektes ausbildenden Oberflächenbereich erfasst werden und bei dem zweiten Objekt die zweiten Konturpunkte auf dem die Innenseite des zweiten Objektes ausbildenden Oberflächenbereich erfasst werden.

Aus der Erfassung der Außenseite des einen Objektes sowie der Innenseite des anderen Objektes, welche bei der Vorbeifahrt des Kraftfahrzeugs an der Parklücke beide im Erfassungsbereich der Sensoreinrichtung liegen, ergibt sich der Vorteil, dass die Orientierungen der Seitenbegrenzungen der Parklücke mit einer besonders hohen Genauigkeit bereits vor Beginn des Einparkvorgangs während der Vorbeifahrt bestimmt werden können. Die Parklücke wird also charakterisiert, bevor der Einparkvorgang in die Parklücke gestartet wird. Anders ausgedrückt ist die Charakterisierung der Parklücke abgeschlossen, bevor das Kraftfahrzeug in die Parklücke eintaucht. Durch die Bestimmung der Orientierung der Parklücke vor Beginn des Einparkvorgangs kann in vorteilhafter Weise verhindert werden, dass der Einparkvorgang gestartet wird, wenn die Parklücke ungeeignet für das Kraftfahrzeug ist. Dies kann beispielsweise der Fall sein, wenn aufgrund der schrägen Positionierung zumindest eines der Objekte und damit aufgrund der Verjüngung der Parklücke die Breite der Parklücke nicht groß genug für das konkrete Kraftfahrzeug ist.

In einem dritten Fall können bei dem ersten Objekt die ersten Konturpunkte auf dem die Außenseite des ersten Objektes ausbildenden Oberflächenbereich und bei dem zweiten Objekt die zweiten Konturpunkte auf dem die Außenseite des zweiten Objektes ausbildenden Oberflächenbereich erfasst werden. Hier muss die Sensoreinrichtung des Kraftfahrzeugs zum Erfassen der ersten und zweiten Konturpunkte nicht in die Parklücke hineinblicken. Anhand der ersten Konturpunkte kann, beispielsweise mittels Ausgleichsrechnung, die erste Konturlinie bestimmt werden und anhand der zweiten Konturpunkte kann, beispielsweise mittels Ausgleichsrechnung, die zweite Konturlinie bestimmt werden. Die Konturlinien repräsentieren dabei die Außenseiten der Objekte und erstrecken sich entlang der Tiefenrichtung der Parklücke. Anhand der Orientierung der Konturlinien kann dabei auf die Orientierung der Seitenbegrenzungen der Parklücke geschlossen werden. Es wird insbesondere wiederum davon ausgegangen, dass die Außenseiten der Objekte in etwa parallel zu den zugehörigen Innenseiten der Objekte orientiert sind, wobei die Innenseiten die Seitenbegrenzungen der Parklücke repräsentieren.

Insgesamt können in vorteilhafter Weise anhand der Orientierungen der Konturlinien die Orientierungen der Seitenbegrenzungen der Parklücke und damit die Orientierung der Parklücke, insbesondere vor Beginn eines Einparkvorgangs, bestimmt werden. Wenn die Konturlinien und damit die Seitenbegrenzungen parallel zueinander orientiert sind, so kann davon ausgegangen werden, dass die Parklücke rechteckförmig ausgebildet ist. Wenn die Konturlinien und damit die Seitenbegrenzungen schräg zueinander orientiert sind, so kann davon ausgegangen werden, dass die Parklücke nicht rechteckförmig ausgebildet ist, und beispielsweise entlang der Tiefenrichtung verjüngt ist.

Besonders bevorzugt wird im Fall, dass bei zumindest einem der Objekte die Konturpunkte an der Außenseite erfasst werden, zumindest eine dritte Konturlinie durch Parallelverschiebung der die Außenseite des Objektes repräsentierenden ersten und/oder zweiten Konturlinie um einen vorbestimmten Verschiebungswert bestimmt, durch welche eine der Parklücke zugewandte Innenseite des Objektes repräsentiert wird. Die zumindest eine dritte Konturlinie wird als eine sich in der Tiefenrichtung der Parklücke erstreckende Seitenbegrenzung der Parklücke bestimmt. Der Erfindung liegt hierbei die Erkenntnis zugrunde, dass insbesondere bei Objekten in Form von geparkten Kraftfahrzeugen die Außenseite und die Innenseite im Wesentlichen parallel zueinander verlaufen. Dabei wird die die Außenseite des ersten und/oder des zweiten Objektes charakterisierende erste und/oder zweite Konturlinie um den vorbestimmten Verschiebungswert verschoben. Dieser Verschiebungswert repräsentiert einen Abstand zwischen der Außenseite und der Innenseite des ersten und/oder des zweiten Objektes. Die zumindest eine resultierende dritte Konturlinie beschreibt die Innenseite des ersten und/oder des zweiten Objektes. Die anhand der Parallelverschiebung der ersten und/oder der zweiten Konturlinie bestimmte Innenseite des ersten und/oder des zweiten Objektes entspricht somit zumindest einer Seitenbegrenzung der Parklücke. Im Falle, dass bei einem Objekt die Außenseite und bei dem anderen Objekt die Innenseite erfasst wird, entspricht die parallelverschobene Konturlinie der ersten Seitenbegrenzung und die Konturlinie, welche anhand der Konturpunkte auf der Innenseite bestimmt wird, der zweiten Seitenbegrenzung. Anhand einer Orientierung der Seitenbegrenzungen kann dann die Orientierung der Parklücke bestimmt werden.

Welche der sich entlang der Tiefenrichtung erstreckende Seitenbereiche der Objekte von der Sensoreinrichtung während der Vorbeifahrt des Kraftfahrzeugs an der Parklücke erfasst werden, hängt dabei insbesondere von einem Anbauort der Sensoreinrichtung am Kraftfahrzeug und einer Blickrichtung der Sensoreinrichtung ab. Beispielsweise können bei demjenigen Objekt, bei welchem die Innenseite im Erfassungsbereich der Sensoreinrichtung liegt, wenn die Sensoreinrichtung bei der Vorbeifahrt in die Parklücke blickt, die Konturpunkte auf der Innenseite erfasst werden. Bei demjenigen Objekt, bei welchem die Außenseite bei der Vorbeifahrt in dem Erfassungsbereich der Sensoreinrichtung liegt, können die Konturpunkte an der Außenseite erfasst werden.

Im Falle einer in Fahrtrichtung des Kraftfahrzeugs blickenden Sensoreinrichtung kann beispielsweise eine die Außenseite repräsentierende Konturlinie durch Erfassen der Konturpunkte auf der Außenseite bei dem während der Vorbeifahrt zuerst von dem Kraftfahrzeug passierten Objekt bestimmt werden. Eine die Innenseite repräsentierende Konturlinie kann durch Erfassen der Konturpunkte auf der Innenseite bei dem während der Vorbeifahrt zuletzt von dem Kraftfahrzeug passierten Objekt bestimmt werden. Die Sensoreinrichtung kann hier beispielsweise in einem Frontbereich des Kraftfahrzeugs angeordnet sein und nach vorne blicken. Zum Bestimmen der dritten Konturlinie kann dabei die die Außenseite repräsentierende Konturlinie in Fahrtrichtung parallel verschoben werden.

Im Falle einer entgegen einer Fahrtrichtung des Kraftfahrzeugs blickenden Sensoreinrichtung kann beispielsweise eine die Innenseite repräsentierende Konturlinie durch Erfassen der Konturpunkte an der Innenseite bei dem während der Vorbeifahrt zuerst von dem Kraftfahrzeug passierten Objekt bestimmt werden und eine die Außenseite repräsentierende Konturlinie durch Erfassen der Konturpunkte an der Außenseite bei dem während der Vorbeifahrt zuletzt von dem Kraftfahrzeug passierten Objekt bestimmt werden. Die Sensoreinrichtung kann hier beispielsweise in einem Heckbereich des Kraftfahrzeugs angeordnet sein und nach hinten blicken. Zum Bestimmen der dritten Konturlinie kann dabei die die Außenseite repräsentierende Konturlinie entgegen der Fahrtrichtung parallel verschoben werden.

Im Falle, dass die Sensoreinrichtung dazu ausgelegt ist, sowohl in Fahrtrichtung als auch entgegen der Fahrtrichtung zu blicken, können von beiden Objekten die Innenseiten und die Außenseiten erfasst werden. Die Orientierungen der Seitenbegrenzungen der Parklücke können somit einmal direkt anhand der die Innenseiten repräsentierenden Konturlinien und einmal indirekt anhand der parallelverschobenen Konturlinien bestimmt werden. So kann die Orientierung der Parklücke besonders sicher und zuverlässig bestimmt werden.

Vorzugsweise wird als der vorbestimmte Verschiebungswert ein Wert zwischen 1,55 m und 2,50 m, insbesondere 1,85 m, bestimmt. Dieser Verschiebungswert weist dabei insbesondere den Wert einer Standardbreite von Kraftfahrzeugen auf. Durch Vorgegeben des Verschiebungswertes als einen festen Zahlenwert kann die dritte Konturlinie besonders schnell und einfach mittels der Parallelverschiebung bestimmt werden.

Auch kann vorgesehen sein, dass im Fall, dass bei zumindest einem der Objekte die Konturpunkte an der Außenseite erfasst werden, bei diesem Objekt dritte Konturpunkte an einer dem Kraftfahrzeug zugewandten Frontseite bestimmt werden, anhand der dritten Konturpunkte eine Länge der Frontseite des Objektes bestimmt wird und der Verschiebungswert als die Länge der Frontseite bestimmt wird. Die Frontseite ist insbesondere senkrecht zu der die Außenseite repräsentierenden ersten und/oder zweiten Konturlinie orientiert und grenzt an die die Außenseite repräsentierende erste und/oder zweite Konturlinie an. Bei einem Objekt in Form von einem Kraftfahrzeug, das rückwärts in einer Querparklücke geparkt ist, entspricht die Frontseite dem Frontbereich des geparkten Kraftfahrzeugs. Bei einem Kraftfahrzeug, das vorwärts in der Querparklücke geparkt ist, entspricht die Frontseite dem Heckbereich des geparkten Kraftfahrzeugs. Anhand der Länge der Frontseite kann der tatsächliche Abstand zwischen der Außenseite und der Innenseite des Objektes, also beispielsweise eine tatsächliche Breite des geparkten Kraftfahrzeugs, bestimmt werden. Dies ist besonders vorteilhaft, falls das geparkte Kraftfahrzeug eine Breite aufweist, welche nicht der Standardbreite entspricht, oder falls das geparkte Kraftfahrzeug längs geparkt ist. Beispielsweise kann vorgesehen sein, dass der Verschiebungswert zumindest 1,85 m aufweist. Nur falls die Länge der Frontseite größer als 1,85 m ist, wird der Wert der Länge der Frontseite als der Verschiebungswert vorgegeben.

In einer Weiterbildung der Erfindung wird anhand einer räumlichen Lage der die Seitenbegrenzungen der Parklücke repräsentierenden Konturlinien eine tiefenrichtungsabhängige Breite der Parklücke bestimmt. Anders ausgedrückt wird die Breite der Parklücke über die Tiefe der Parklücke bestimmt. Die die Seitenbegrenzungen repräsentierenden Konturlinien können dabei die Konturlinien sein, welche anhand von Konturpunkten auf Innenseiten der Objekte bestimmt werden und/der welche durch Parallelverschiebung der die Außenseite repräsentierenden Konturlinien bestimmt bzw. erzeugt werden. Durch die räumliche Lage der die Seitenbegrenzungen repräsentierenden Konturlinien zueinander kann somit ein tiefenrichtungsabhängiger Abstand der Konturlinien, also der beiden Seitenbegrenzungen der Parklücke, bestimmt werden, welche die tiefenrichtungsabhängige Breite der Parklücke charakterisiert. So kann beispielsweise anhand der Konturlinien eine Verjüngung der Parklücke in Tiefenrichtung erkannt werden und somit beispielsweise vorhergesagt werden, ob die Parklücke über die gesamte Tiefe breit genug zum Aufnehmen des Kraftfahrzeugs ist.

Gemäß einer weiteren Ausführungsform der Erfindung wird anhand einer Länge der ersten Konturlinie und/oder der zweiten Konturlinie und/oder der dritten Konturlinie als der eine Tiefe der Parklücke bestimmt. Da die Konturlinien jeweilige Seitenbegrenzungen der Parklücke beschreiben, kann anhand der Länge zumindest einer der sich in Tiefenrichtung erstreckenden Konturlinien die Tiefe der Parklücke bestimmt werden. Somit kann vor Beginn des Einparkvorgangs vorhergesagt werden, ob dich Parklücke tief genug zum Aufnehmen des Kraftfahrzeugs ist.

Es erweist sich erfindungsgemäß als vorteilhaft, wenn im Fall, dass bei zumindest einem der Objekte die Konturpunkte an der Außenseite erfasst werden, eine Länge der die Außenseite repräsentierenden ersten und/oder zweiten Konturlinie bestimmt wird und die Orientierung der Parklücke anhand der ersten und der zweiten Konturlinie nur bestimmt wird, wenn die Länge der die Außenseite repräsentierenden ersten und/oder zweiten Konturlinie einen vorbestimmen Schwellwert überschreitet. Dieser Ausführungsform liegt die Erkenntnis zugrunde, dass die die Außenseite repräsentierende erste und/oder zweite Konturlinie nur dann zuverlässig erfasst werden kann, wenn die Außenseite des betreffenden Objektes zumindest über einen vorbestimmten Bereich unverdeckt ist. Wenn beispielsweise neben dem betreffenden Objekt ein drittes Objekt positioniert ist, so kann es vorkommen, dass das dritte Objekt die Außenseite des betreffenden Objektes zumindest bereichsweise abdeckt bzw. abschirmt. Dies kann beispielsweise vorkommen, wenn neben dem betreffenden Objekt in Form von einem geparkten Kraftfahrzeug ein weiteres Kraftfahrzeug geparkt ist. Wenn die Länge der die Außenseite repräsentierenden ersten und/oder zweiten Konturlinie den vorbestimmten Schwellwert unterschreitet, so ist dies ein Indiz dafür, dass die Außenseite des betreffenden Objekte zumindest bereichsweise verdeckt ist. Um nun zu verhindern, dass die Parklücke fehlerhaft charakterisiert wird, wird die Orientierung der Parklücke nicht anhand der Konturlinien bestimmt, falls die Länge der die Außenseite repräsentierenden ersten und/oder zweiten Konturlinie den vorbestimmten Schwellwert unterschreitet.

Die Erfindung betrifft außerdem ein Parkassistenzsystem für ein Kraftfahrzeug zum Unterstützen eines Fahrers des Kraftfahrzeugs beim Einparken in eine von zwei Objekten begrenzte Parklücke. Gemäß einer Ausführungsform weist das Parkassistenzsystem insbesondere eine Sensoreinrichtung zum Erfassen von Konturpunkten der Objekte während einer Vorbeifahrt des Kraftfahrzeugs an der Parklücke und eine Steuereinrichtung zum Bestimmen einer Orientierung der Parklücke relativ zum Kraftfahrzeug anhand der Konturpunkte auf. Die Sensoreinrichtung ist insbesondere dazu ausgelegt, bei einem ersten der Objekte erste Konturpunkte an einer der Parklücke zugewandten und sich entlang der Tiefenrichtung der Parklücke erstreckenden Innenseite und/oder an einer der Parklücke abgewandten und sich entlang der Tiefenrichtung der Parklücke erstreckenden Außenseite zu erfassen und bei einem zweiten der Objekte zweite Konturpunkte an einer der Parklücke abgewandten und sich entlang einer Tiefenrichtung der Parklücke erstreckenden Außenseite und/oder an einer der Parklücke zugewandten und sich entlang der Tiefenrichtung der Parklücke erstreckenden Innenseite zu erfassen. Die Steuereinrichtung ist insbesondere dazu ausgelegt, anhand der ersten Konturpunkte eine erste Konturlinie und anhand der zweiten Konturpunkte eine zweite Konturlinie zu bestimmen, und anhand einer räumlichen Lage der ersten Konturlinie und der zweiten Konturlinie die Orientierung der Parklücke zu bestimmen.

Gemäß einer besonders bevorzugten Ausführungsform weist das Parkassistenzsystem eine Sensoreinrichtung zum Erfassen von Konturpunkten der Objekte während einer Vorbeifahrt des Kraftfahrzeugs an der Parklücke und eine Steuereinrichtung zum Bestimmen einer Orientierung der Parklücke relativ zum Kraftfahrzeug anhand der Konturpunkte auf. Die Sensoreinrichtung ist dazu ausgelegt, bei einem ersten der Objekte erste Konturpunkte an einer der Parklücke zugewandten und sich entlang der Tiefenrichtung der Parklücke erstreckenden Innenseite und/oder an einer der Parklücke abgewandten und sich entlang der Tiefenrichtung der Parklücke erstreckenden Außenseite zu erfassen und bei einem zweiten der Objekte zweite Konturpunkte an einer der Parklücke abgewandten und sich entlang einer Tiefenrichtung der Parklücke erstreckenden Außenseite und/oder an einer der Parklücke zugewandten und sich entlang der Tiefenrichtung der Parklücke erstreckenden Innenseite zu erfassen. Die Steuereinrichtung ist dazu ausgelegt, anhand der ersten Konturpunkte eine erste Konturlinie und anhand der zweiten Konturpunkte eine zweite Konturlinie zu bestimmen, und anhand einer räumlichen Lage der ersten Konturlinie und der zweiten Konturlinie die Orientierung der Parklücke zu bestimmen.

Vorzugsweise ist die Steuereinrichtung dazu ausgelegt, unter Berücksichtigung der Orientierung der Parklücke eine Einparktrajektorie für das Kraftfahrzeug in die Parklücke zu bestimmen. Die Einparktrajektorie wird insbesondere dann bestimmt, wenn anhand der Konturlinien erkannt wurde, dass die Parklücke geeignet für das Kraftfahrzeug ist, also beispielsweise über die gesamte Tiefe der Parklücke breit genug für das Kraftfahrzeug ist. Beispielsweise kann die Einparktrajektorie ausgehend von einem Startpunkt bestimmt werden, an welchem sich das Kraftfahrzeug nach der Vorbeifahrt an der Parklücke befindet. Die Einparktrajektorie kann dem Fahrer des Kraftfahrzeugs beispielsweise auf einer fahrzeugseitigen Anzeigeeinrichtung angezeigt werden, sodass der Fahrer das Kraftfahrzeug entlang der angezeigten Einparktrajektorie in die Parklücke manövrieren kann. Außerdem kann vorgesehen sein, dass die Steuereinrichtung dazu ausgelegt ist, das Kraftfahrzeug zumindest semi-autonom, insbesondere vollautonom, entlang der bestimmten Einparktrajektorie in die Parklücke zu manövrieren. Dazu kann die Steuereinrichtung in eine Längsführung und eine Querführung des Kraftfahrzeugs eingreifen.

Ein erfindungsgemäßes Kraftfahrzeug umfasst ein erfindungsgemäßes Parkassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Parkassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs beim Vorbeifahren an einer Parklücke;
- Fig. 2: eine schematische Darstellung einer Parkfläche mit zwei parallel positionierten Objekten und einer sich dazwischen befindlichen Parklücke;
- Fig. 3: eine schematische Darstellung eines Kraftfahrzeugs beim Erfassen einer fehlerhaften Orientierung einer Parklücke;
- Fig. 4: eine schematische Darstellung des Kraftfahrzeugs beim Erfassen einer korrekten, tatsächlichen Orientierung einer Parklücke; und
- Fig. 5: eine schematische Darstellung des erfindungsgemäßen Kraftfahrzeugs beim Vorbeifahren an einer Parklücke einer Parkfläche, auf welcher mehrere Objekte positioniert sind.

In den Figuren sind gleiche sowie funktionsgleiche Elemente mit den gleichen Bezugszeichen versehen.

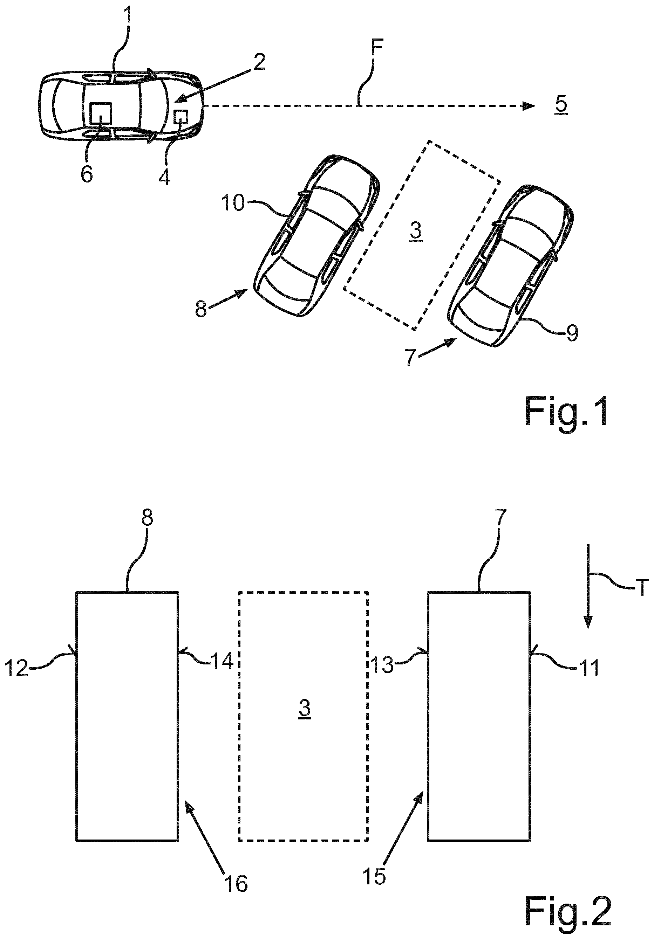

Fig. 1 zeigt ein Kraftfahrzeug 1 gemäß der vorliegenden Erfindung. Das Kraftfahrzeug 1 ist im vorliegenden Fall als ein Personenkraftwagen ausgebildet. Das Kraftfahrzeug 1 weist ein Parkassistenzsystem 2 auf, welches einen Fahrer des Kraftfahrzeugs 1 beim Einparken in eine Parklücke 3 unterstützen kann. Dazu weist das Parkassistenzsystem 2 eine Sensoreinrichtung 4 auf, welche im vorliegenden Fall in einem Frontbereich des Kraftfahrzeugs 1 angeordnet ist und in Vorwärtsrichtung blicken kann. Die Sensoreinrichtung 4 kann beispielsweise zumindest einen Radarsensor und/oder zumindest einen Lidar-Sensor und/oder zumindest eine Kamera aufweisen. Mittels der fahrzeugseitigen Sensoreinrichtung 4 kann ein Umgebungsbereich 5 des Kraftfahrzeugs 1 überwacht werden, indem aus dem Umgebungsbereich 5 Sensordaten erfasst werden. Beispielsweise kann die Sensoreinrichtung 4 bei einer Vorbeifahrt F des Kraftfahrzeugs 1 an der Parklücke 3 Sensordaten erfassen, anhand derer die Parklücke 3 charakterisiert werden kann. Außerdem weist das Parkassistenzsystem 2 eine Steuereinrichtung 6 auf, welche beispielsweise in ein Steuergerät des Kraftfahrzeugs 1 integriert sein kann.

Die Steuereinrichtung 6 kann die Sensordaten der Sensoreinrichtung 4 auswerten, um die Parklücke 3 zu charakterisieren. Beispielsweise kann eine Orientierung der Parklücke 3 relativ zum Kraftfahrzeug 1 bestimmt werden. Außerdem kann die Steuereinrichtung 6 dazu ausgelegt sein, in Abhängigkeit von der Orientierung der Parklücke 3 eine Einparktrajektorie für das Kraftfahrzeug 1 in die Parklücke 3 bestimmen, entlang welcher das Kraftfahrzeug 1 in die Parklücke 3 eingeparkt werden kann. Beispielsweise kann die Steuereinrichtung 6 das Kraftfahrzeug 1 zumindest semi-autonom entlang der Einparktrajektorie in die Parklücke 3 einparken. Die Parklücke 3 ist hier durch zwei Objekte 7, 8 begrenzt, wobei die Objekte 7, 8 im vorliegenden Fall als geparkte Kraftfahrzeuge 9, 10 ausgebildet sind. Hier ist die Parklücke 3 als eine rechteckförmige Schrägparklücke ausgebildet und nach rechts hin durch ein erstes Objekt 7, hier durch ein erstes geparktes Kraftfahrzeug 9, und nach links hin durch ein zweites Objekt 8, hier durch ein zweites geparktes Kraftfahrzeug 10, begrenzt. Anhand der Objekte 7, 8 kann die Orientierung der Parklücke 3 bestimmt werden.

In Fig. 2 sind die Objekte 7, 8 schematisch dargestellt, wobei die Objekte 7, 8 hier parallel zueinander positioniert sind. Zwischen den Objekten 7, 8 befindet sich die Parklücke 3, welche im vorliegenden Fall als eine rechteckförmige Querparklücke ausgebildet ist. Jedes Objekt 7, 8 weist dabei eine der Parklücke 3 abgewandte Außenseite 11, 12 auf. Außerdem weist jedes Objekt 7, 8 eine Innenseite 13, 14 auf, welche der Parklücke 3 zugewandt ist und die Parklücke 3 begrenzt. Die Außenseiten 11, 12 und Innenseiten 13, 14 der Objekte 7, 8 erstrecken sich dabei entlang einer Tiefenrichtung T der Parklücke 3. Die sich entlang der Tiefenrichtung T erstreckenden Außenseiten 11, 12 und Innenseiten 13, 14 müssen dabei nicht parallel zu der Tiefenrichtung T orientiert sein. Die Innenseiten 13, 14 entsprechen dabei Seitenbegrenzungen 15, 16 der Parklücke 3, welche sich ebenfalls in Tiefenrichtung T der Parklücke 3 erstrecken. Eine erste Innenseite 13 des ersten Objektes 7 begrenzt die Parklücke 3 hier nach rechts hin. Die erste Innenseite 13 entspricht also einer ersten Seitenbegrenzung 15. Eine zweite Innenseite 14 des zweiten Objektes 8 begrenzt die Parklücke 3 hier nach links hin. Die zweite Innenseite 14 entspricht also einer zweiten Seitenbegrenzung 16. Im Falle von Objekten 7, 8, welche als in Querparklücken oder Schrägparklücken geparkte Kraftfahrzeuge 9, 10 ausgebildet sind, entsprechen die Außenseiten 11, 12 und Innenseiten 13, 14 Seitenbereichen der Kraftfahrzeuge 9, 10.

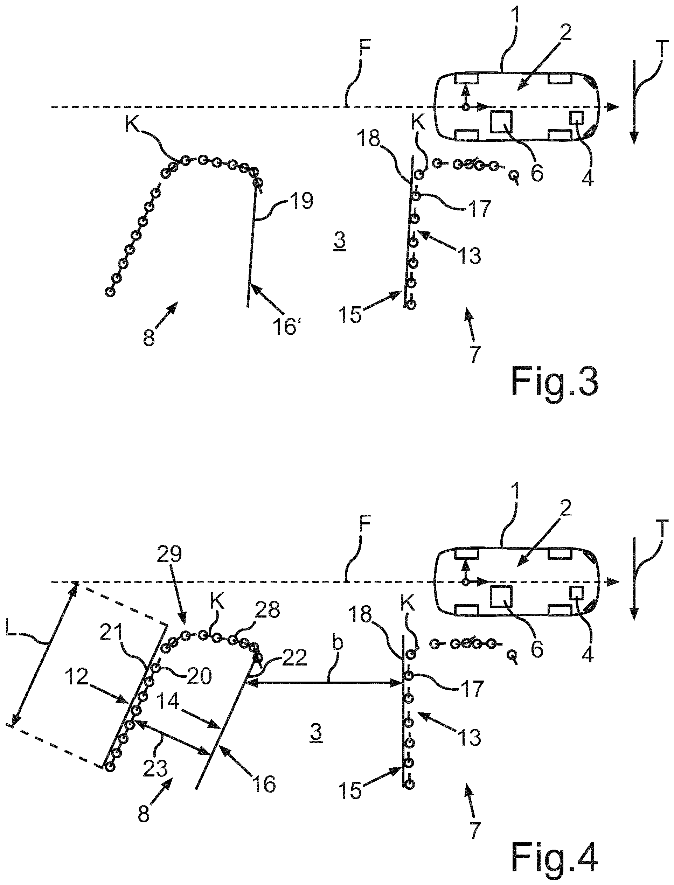

In Fig. 3 und Fig. 4 ist das Kraftfahrzeug 1 dargestellt, welches die Vorbeifahrt F an der Parklücke 3 bereits durchgeführt hat und somit die Parklücke 3 bereits passiert hat. Hier sind die Objekte 7, 8, von denen hier lediglich Bereiche einer Kontur K dargestellt sind, nicht parallel zueinander positioniert. Beispielsweise kann das zweite Objekt 8 schräg bezüglich des ersten Objektes 7 angeordnet sein, sodass die Parklücke 3 nicht rechteckförmig ausgebildet ist. Hier ist die Parklücke 3 also nach oben hin verjüngt. Durch die Sensoreinrichtung 4, welche während der Vorbeifahrt F an der Parklücke 3 in die Parklücke 3 geblickt hat, wurden hier erste Konturpunkte 17 an der der Parklücke 3 zugewandten ersten Innenseite 13 des ersten Objektes 7 erfasst. Anhand der ersten Konturpunkte 17 wird eine erste Konturlinie 18 bestimmt, welche sich entlang der Tiefenrichtung T der Parklücke 3 erstreckt und die erste Innenseite 13 des ersten Objektes 7 sowie die erste Seitenbegrenzung 15 der Parklücke 3 repräsentiert. Da die Sensoreinrichtung 4 hier im Frontbereich des Kraftfahrzeugs 1 angeordnet ist, befindet sich die zweite Innenseite 14 des zweiten Objektes 8 nicht in einem Erfassungsbereich der Sensoreinrichtung 4 und kann daher nicht direkt erfasst werden. Dies bedeutet, dass keine Konturpunkte an der zweiten Innenseite 14 des zweiten Objektes 8 erfasst werden können. Daher kann die durch die zweite Innenseite 14 des zweiten Objektes 8 repräsentierte zweite Seitenbegrenzung 16 der Parklücke 3 nicht direkt anhand der Sensordaten der Sensoreinrichtung 4 erfasst werden.

Eine Möglichkeit, die zweite Seitenbegrenzung 16 der Parklücke 3 abzuschätzen, ist in Fig. 3 gezeigt. Dabei wird die erste Konturlinie 18 unter der hier falschen Annahme von parallel angeordneten Objekten 7, 8 parallel verschoben. Dadurch wird eine zu der ersten Konturlinie 18 parallele Konturlinie 19 erzeugt, von welcher angenommen wird, dass sie die Seitenbegrenzung 16' der Parklücke 3 repräsentiert. Diese Seitenbegrenzung 16' entspricht jedoch aufgrund der schrägen Positionierung des zweiten Objektes 8 nicht der tatsächlichen Seitenbegrenzung 16 der Parklücke 3. Die tatsächliche Orientierung der Parklücke 3 kann somit gemäß Fig. 3 nicht korrekt bestimmt werden.

Daher werden, wie in Fig. 4 gezeigt, zusätzlich zu den ersten Konturpunkten 17 des ersten Objektes 7 zweite Konturpunkte 20 an der Außenseite 12 des zweiten Objektes 8 erfasst. Anhand der zweiten Konturpunkte 20 wird eine zweite Konturlinie 21 bestimmt, welche die Außenseite 12 des zweiten Objektes 8 repräsentiert. Da die Innenseite 14 und die Außenseite 12 des zweiten Objektes 8, insbesondere im Falle von einem geparkten Kraftfahrzeug, üblicherweise parallel verlaufen, kann davon ausgegangen werden, dass die Innenseite 14, welche die tatsächliche Seitenbegrenzung 16 der Parklücke 3 repräsentiert, entlang einer Richtung der zweiten Konturlinie 21 orientiert ist. Somit kann anhand der Orientierungen der Konturlinien 18, 21 die tatsächliche Orientierung der Parklücke 3 bestimmt werden. Es kann also die tatsächliche Form der Parklücke 3 abgeschätzt werden.

Außerdem kann eine tiefenrichtungsabhängige Breite b der Parklücke 3 bestimmt werden, indem eine dritte Konturlinie 22 durch Parallelverschiebung der zweiten Konturlinie 21 um einen vorbestimmten Verschiebungswert 23 erzeugt wird. Die dritte Konturlinie 22 repräsentiert dabei die Innenseite 14 des zweiten Objektes 8 und damit die tatsächliche Seitenbegrenzung 16 der Parklücke 3. Der Verschiebungswert 23 kann dabei als ein fester Wert vorgegeben werden, welcher beispielsweise dem Wert einer Standardbreite eines Kraftfahrzeugs, insbesondere 1,85 m, entspricht. Auch kann vorgesehen sein, dass dritte Konturpunkte 28 an einer Frontseite 29 des zweiten Objektes 8, welche dem Kraftfahrzeug 1 während der Vorbeifahrt F an der Parklücke 3 zugewandt ist, bestimmt werden. Anhand der dritten Konturpunkte 28 kann eine Länge der Frontseite 29 bestimmt werden, welche dem tatsächlichen Abstand zwischen der Außenseite 12 und der Innenseite 14 des zweiten Objektes 8 entspricht. Somit kann der Verschiebungswert 23 auch als der Wert der Länge der Frontseite 29 vorgegeben werden. Anhand von räumlichen Lagen der ersten Konturlinie 18 und der dritten Konturlinie 21 zueinander, insbesondere anhand deren tiefenrichtungsabhängigem Abstand, kann die Breite b der Parklücke 3 bestimmt werden. Auch kann eine Tiefe der Parklücke 3 bestimmt werden, indem eine Länge L zumindest einer der Konturlinien 18, 21, 22 erfasst wird.

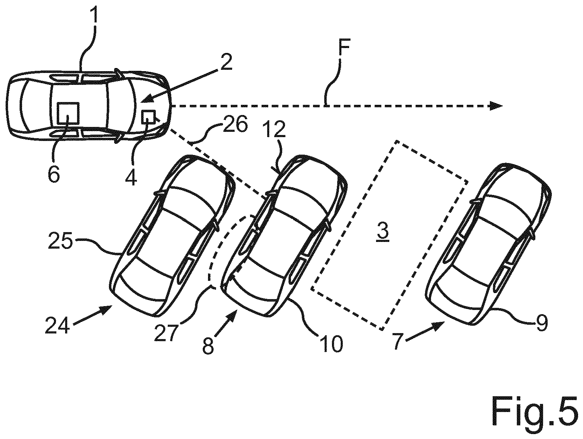

In Fig. 5 ist gezeigt, dass die Außenseite 12 des zweiten Objektes 8, hier des zweiten Kraftfahrzeugs 10, bereichsweise durch ein anderes Objekt 24 verdeckt ist. Hier ist das Objekt 24 ein anderes Kraftfahrzeug 25, welches neben dem geparkten Kraftfahrzeug 10 geparkt ist. Ein Sehstrahl 26 der Sensoreinrichtung 4 kann somit einen bestimmen Bereich 27 der Außenseite 12 des zweiten Objektes 8 nicht erreichen. Falls eine Länge des von der Sensoreinrichtung 4 detektierten Bereiches der Außenseite 12, also die Länge L der zweiten Konturlinie 21, einen vorbestimmen Schwellwert unterschreitet, so kann davon ausgegangen werden, dass die Außenseite 12 des zweiten Objektes 8 verdeckt ist. Wenn die Länge L der zweiten Konturlinie 21 den vorbestimmten Schwellwert unterschreitet, kann nicht mehr gewährleistet werden, dass anhand der Orientierung der zweiten Konturlinie 21 die tatsächliche Orientierung der Parklücke 3 korrekt bestimmt werden kann. Daher wird in diesem Fall die Orientierung der Parklücke 3 nicht anhand der Konturlinien 18, 21, 22 bestimmt.

## Patentansprüche

1. Verfahren zum Charakterisieren einer von zwei Objekten (7, 8) begrenzten Parklücke (3) für ein Kraftfahrzeug (1), bei welchem mittels einer Sensoreinrichtung (4) des Kraftfahrzeugs (1) Konturpunkte der Objekte (7, 8) während einer Vorbeifahrt (F) des Kraftfahrzeugs (1) an der Parklücke (3) erfasst werden und anhand der Konturpunkte eine Orientierung der Parklücke (3) relativ zum Kraftfahrzeug (1) bestimmt wird, wobei
- bei einem ersten der Objekte (7) erste Konturpunkte (17) an einer der Parklücke (3) zugewandten und sich entlang einer Tiefenrichtung (T) der Parklücke (3) erstreckenden Innenseite (13) und/oder an einer der Parklücke (3) abgewandten und sich entlang der Tiefenrichtung (T) der Parklücke (3) erstreckenden Außenseite (11) erfasst werden und anhand der ersten Konturpunkte (17) eine erste Konturlinie (18) bestimmt wird,
- bei einem zweiten der Objekte (8) zweite Konturpunkte (20) an einer der Parklücke (3) abgewandten und sich entlang der Tiefenrichtung (T) der Parklücke (3) erstreckenden Außenseite (12) und/oder an einer der Parklücke (3) zugewandten und sich entlang der Tiefenrichtung (T) der Parklücke (3) erstreckenden Innenseite (14) erfasst werden und anhand der zweiten Konturpunkte (20) eine zweite Konturlinie (21) bestimmt wird,
- anhand einer Orientierung der ersten Konturlinie (18) und der zweiten Konturlinie (21) die Orientierung der Parklücke (3) bestimmt wird,
**dadurch gekennzeichnet, dass**
im Fall, dass bei zumindest einem der Objekte (7, 8) die Konturpunkte (17, 20) an der Außenseite (11, 12) erfasst werden, eine Länge (L) der die Außenseite (11, 12) repräsentierenden ersten und/oder zweiten Konturlinie (18, 21) bestimmt wird und die Orientierung der Parklücke (3) anhand der ersten und der zweiten Konturlinie (18, 21) nur bestimmt wird, wenn die Länge (L) der die Außenseite (11, 12) repräsentierenden ersten und/oder zweiten Konturlinie (18, 21) einen vorbestimmen Schwellwert überschreitet.

2. Verfahren nach Anspruch 1,
**dadurch gekennzeichnet, dass**
im Fall, dass bei zumindest einem der Objekte (7, 8) die Konturpunkte (17, 20) an der Außenseite (11, 12) erfasst werden, zumindest eine dritte Konturlinie (22) durch Parallelverschiebung der die Außenseite (11, 12) des Objektes (7, 8) repräsentierenden ersten und/oder zweiten Konturlinie (18, 21) um einen vorbestimmten Verschiebungswert (23) bestimmt wird, durch welche eine der Parklücke (3) zugewandte Innenseite (13, 14) des Objektes (7, 8) repräsentiert wird, und die zumindest eine dritte Konturlinie (18, 21) als eine sich in der Tiefenrichtung (T) der Parklücke (3) erstreckende Seitenbegrenzung (15, 16) der Parklücke (3) bestimmt wird.

3. Verfahren nach Anspruch 2,
**dadurch gekennzeichnet, dass**
als der vorbestimmte Verschiebungswert (23) ein Wert zwischen 1,55 m und 2,50 m, insbesondere 1,85 m, bestimmt wird.

4. Verfahren nach Anspruch 2 oder 3,
**dadurch gekennzeichnet, dass**
im Fall, dass bei zumindest einem der Objekte (7, 8) die Konturpunkte (17, 20) an der Außenseite (11, 12) erfasst werden, bei diesem Objekt (7, 8) dritte Konturpunkte (28) an einer dem Kraftfahrzeug (1) zugewandten Frontseite (29) bestimmt werden, anhand der dritten Konturpunkte (28) eine Länge der Frontseite (29) des Objektes (8) bestimmt wird und der Verschiebungswert (23) als die Länge der Frontseite (29) bestimmt wird.

5. Verfahren nach einem der Ansprüche 2 bis 4,
**dadurch gekennzeichnet, dass**
anhand einer räumlichen Lage der die Seitenbegrenzungen (15, 16) der Parklücke (3) repräsentierenden Konturlinien (18, 22) eine tiefenrichtungsabhängige Breite (b) der Parklücke (3) bestimmt wird.

6. Verfahren nach einem der Ansprüche 2 bis 5,
**dadurch gekennzeichnet, dass**
anhand einer Länge der ersten Konturlinie (18) und/oder der zweiten Konturlinie (21) und/oder der dritten Konturlinie (22) eine Tiefe der Parklücke (3) bestimmt wird.

7. Verfahren nach einem der vorhergehenden Ansprüche,
**dadurch gekennzeichnet, dass**
die Konturpunkte (17, 20) mittels zumindest eines Radarsensors und/oder zumindest eines Lidar-Sensors und/oder zumindest einer Kamera der Sensoreinrichtung (4) des Kraftfahrzeugs (1) erfasst werden.

8. Parkassistenzsystem (2) für ein Kraftfahrzeug (1) zum Unterstützen eines Fahrers des Kraftfahrzeugs (1) beim Einparken in eine von zwei Objekten (7, 8) begrenzte Parklücke (3), aufweisend eine Sensoreinrichtung (4) zum Erfassen von Konturpunkten der Objekte (7, 8) während einer Vorbeifahrt (F) des Kraftfahrzeugs (1) an der Parklücke (3) und eine Steuereinrichtung (6) zum Bestimmen einer Orientierung der Parklücke (3) relativ zum Kraftfahrzeug (1) anhand der Konturpunkte, wobei
- die Sensoreinrichtung (4) dazu ausgelegt ist, bei einem ersten der Objekte (7) erste Konturpunkte (17) an einer der Parklücke (3) zugewandten und sich entlang der Tiefenrichtung (T) der Parklücke (3) erstreckenden Innenseite (13) und/oder an einer der Parklücke (3) abgewandten und sich entlang der Tiefenrichtung (T) der Parklücke (3) erstreckenden Außenseite (11) zu erfassen und bei einem zweiten der Objekte (8) zweite Konturpunkte (20) an einer der Parklücke (3) abgewandten und sich entlang einer Tiefenrichtung (T) der Parklücke (3) erstreckenden Außenseite (12) und/oder an einer der Parklücke (3) zugewandten und sich entlang der Tiefenrichtung (T) der Parklücke (3) erstreckenden Innenseite (14) zu erfassen, und
- die Steuereinrichtung (6) dazu ausgelegt ist, anhand der ersten Konturpunkte (17) eine erste Konturlinie (18) und anhand der zweiten Konturpunkte (20) eine zweite Konturlinie (21) zu bestimmen, und anhand einer räumlichen Lage der ersten Konturlinie (18) und der zweiten Konturlinie (21) die Orientierung der Parklücke (3) zu bestimmen, **dadurch gekennzeichnet, dass** die Steuereinrichtung (6) weiter dazu eingerichtet ist, dass im Fall, dass bei zumindest einem der Objekte (7, 8) die Konturpunkte (17, 20) an der Außenseite (11, 12) erfasst werden, eine Länge (L) der die Außenseite (11, 12) repräsentierenden ersten und/oder zweiten Konturlinie (18, 21) bestimmt wird und die Orientierung der Parklücke (3) anhand der ersten und der zweiten Konturlinie (18, 21) nur bestimmt wird, wenn die Länge (L) der die Außenseite (11, 12) repräsentierenden ersten und/oder zweiten Konturlinie (18, 21) einen vorbestimmen Schwellwert überschreitet.

9. Parkassistenzsystem (2) nach Anspruch 8,
**dadurch gekennzeichnet, dass**
die Steuereinrichtung (6) dazu ausgelegt ist, unter Berücksichtigung der Orientierung der Parklücke (3) eine Einparktrajektorie für das Kraftfahrzeug (1) in die Parklücke (3) zu bestimmen.

10. Kraftfahrzeug (1) mit einem Parkassistenzsystem (2) nach Anspruch 8 oder 9.

## Claims

1. Method for characterizing a parking space (3), delimited by two objects (7, 8), for a motor vehicle (1), in which contour points of the objects (7, 8) are detected by means of a sensor device (4) of the motor vehicle (1) while the motor vehicle (1) is travelling past (F) the parking space (3), and on the basis of the contour points an orientation of the parking space (3) relative to the motor vehicle (1) is determined, wherein
- for a first of the objects (7), first contour points (17) are detected on an inner side (13) which faces the parking space (3) and extends along a depth direction (T) of the parking space (3) and/or on an outer side (11) which faces away from the parking space (3) and extends along the depth direction (T) of the parking space (3), and a first contour line (18) is determined on the basis of the first contour points (17),
- for a second of the objects (8), second contour points (20) are detected on an outer side (12) which faces away from the parking space (3) and extends along the depth direction (T) of the parking space (3) and/or on an inner side (14) which faces the parking space (3) and extends along the depth direction (T) of the parking space (3), and a second contour line (21) is determined on the basis of the second contour points (20),
- the orientation of the parking space (3) is determined on the basis of an orientation of the first contour line (18) and of the second contour line (21),
**characterized in that**
when the contour points (17, 20) on the outer side (11, 12) are detected for at least one of the objects (7, 8), a length (L) of the first and/or second contour line (s) (18, 21) which represent (s) the outer side (11, 12) is determined, and the orientation of the parking space (3) is determined on the basis of the first and second contour lines (18, 21) only if the length (L) of the first and/or second contour line (s) (18, 21) which represent (s) the outer side (11, 12) exceeds a predetermined threshold value.

2. Method according to Claim 1,
**characterized in that**
when the contour points (17, 20) on the outer side (11, 12) are detected for at least one of the objects (7, 8), at least a third contour line (22) is determined by parallel shifting of the first and/or second contour line(s) (18, 21) which represent (s) the outer side (11, 12) of the object (7, 8) by a predetermined shifting value (23), via which contour line (22) an inner side (13, 14), facing the parking space (3), of the object (7, 8) is represented and the at least one third contour line (18, 21) is determined as a lateral boundary (15, 16), extending in the depth direction (T) of the parking space (3), of the parking space (3).

3. Method according to Claim 2,
**characterized in that**
a value between 1.55 m and 2.50 m, in particular 1.85 m, is determined as the predetermined shifting value (23).

4. Method according to Claim 2 or 3,
**characterized in that**
when the contour points (17, 20) on the outer side (11, 12) are detected for at least one of the objects (7, 8), third contour points (28) on a front side (29) facing the motor vehicle (1) are determined for this object (7, 8), a length of the front side (29) of the object (8) is determined on the basis of the third contour points (28) and the shifting value (23) is determined as the length of the front side (29) .

5. Method according to one of Claims 2 to 4,
**characterized in that**
a depth-direction-dependent width (b) of the parking space (3) is determined on the basis of a spatial position of the contour lines (18, 22) which represent the lateral boundaries (15, 16) of the parking space (3).

6. Method according to one of Claims 2 to 5,
**characterized in that**
a depth of the parking space (3) is determined on the basis of a length of the first contour line (18) and/or of the second contour line (21) and/or of the third contour line (22).

7. Method according to one of the preceding claims,
**characterized in that**
the contour points (17, 20) are detected by means of at least one radar sensor and/or at least one lidar sensor and/or at least one camera of the sensor device (4) of the motor vehicle (1).

8. Parking assistance system (2) for a motor vehicle (1) for assisting a driver of the motor vehicle (1) when parking in a parking space (3) which is bounded by two objects (7, 8), having a sensor device (4) for detecting contour points of the objects (7, 8) when the motor vehicle (1) travels past (F) the parking space (3), and a control device (6) for determining an orientation of the parking space (3) relative to the motor vehicle (1) on the basis of the contour points, wherein
- the sensor device (4) is configured to detect, for a first of the objects (7), first contour points (17) on an inner side (13) which faces the parking space (3) and extends along the depth direction (T) of the parking space (3) and/or on an outer side (11) which faces away from the parking space (3) and extends along the depth direction (T) of the parking space (3), and to detect, for a second of the objects (8), second contour points (20) on an outer side (12) which faces away from the parking space (3) and extends along a depth direction (T) of the parking space (3) and/or on an inner side (14) which faces the parking space (3) and extends along the depth direction (T) of the parking space (3),
and
- the control device (6) is configured to determine a first contour line (18) on the basis of the first contour points (17) and a second contour line (21) on the basis of the second contour points (20), and to determine the orientation of the parking space (3) on the basis of a spatial position of the first contour line (18) and of the second contour line (21), **characterized in that** the control device (6) is also configured in such a way that for at least one of the objects (7, 8) the contour points (17, 20) are detected on the outer side (11, 12), a length (L) of the first and/or second contour line(s) (18, 21) which represent(s) the outer side (11, 12) is determined, and the orientation of the parking space (3) is determined on the basis of the first and second contour lines (18, 21) only if the length (L) of the first and/or second contour line(s) (18, 21) which represent(s) the outer side (11, 12) exceeds a predetermined threshold value.

9. Parking assistance system (2) according to Claim 8,
**characterized in that**
the control device (6) is configured to determine a parking trajectory for the motor vehicle (1) into the parking space (3) taking into account the orientation of the parking space (3).

10. Motor vehicle (1) having a parking assistance system (2) according to Claim 8 or 9.

## Revendications

1. Procédé pour caractériser un emplacement de stationnement (3) pour un véhicule automobile (1) délimité par deux objets (7, 8), avec lequel des points de contour des objets (7, 8) sont acquis au moyen d'un dispositif détecteur (4) du véhicule automobile (1) pendant un passage (F) du véhicule automobile (1) au niveau de l'emplacement de stationnement (3) et une orientation de l'emplacement de stationnement (3) par rapport au véhicule automobile (1) est déterminée à l'aide des points de contour,
- pour un premier des objets (7), des premiers points de contour (17) étant acquis au niveau d'un côté intérieur (13) faisant face à l'emplacement de stationnement (3) et s'étendant le long d'une direction de profondeur (T) de l'emplacement de stationnement (3) et/ou au niveau d'un côté extérieur (11) orienté à l'opposé de l'emplacement de stationnement (3) et s'étendant le long de la direction de profondeur (T) de l'emplacement de stationnement (3) et une première ligne de contour (18) étant déterminée à l'aide des premiers points de contour (17),
- pour un deuxième des objets (8), des deuxièmes points de contour (20) étant acquis au niveau d'un côté extérieur (12) orienté à l'opposé de l'emplacement de stationnement (3) et s'étendant le long de la direction de profondeur (T) de l'emplacement de stationnement (3) et/ou au niveau d'un côté intérieur (14) faisant face à l'emplacement de stationnement (3) et s'étendant le long de la direction de profondeur (T) de l'emplacement de stationnement (3) et une deuxième ligne de contour (21) étant déterminée à l'aide des deuxièmes points de contour (20),
- l'orientation de l'emplacement de stationnement (3) étant déterminée à l'aide d'une orientation de la première ligne de contour (18) et de la deuxième ligne de contour (21),
**caractérisé en ce que**
dans le cas où les points de contour (17, 20) sont acquis au niveau du côté extérieur (11, 12) pour au moins l'un des objets (7, 8), une longueur (L) de la première et/ou de la deuxième ligne de contour (18, 21) qui représente le côté extérieur (11, 12) est déterminée et l'orientation de l'emplacement de stationnement (3) n'est déterminée à l'aide de la première et de la deuxième ligne de contour (18, 21) que si la longueur (L) de la première et/ou de la deuxième ligne de contour (18, 21) qui représente le côté extérieur (11, 12) dépasse une valeur de seuil prédéterminée.

2. Procédé selon la revendication 1, **caractérisé en ce que** dans le cas où les points de contour (17, 20) sont acquis au niveau du côté extérieur (11, 12) pour au moins l'un des objets (7, 8), au moins une troisième ligne de contour (22) est déterminée par une translation parallèle d'une valeur de translation (23) prédéterminée de la première et/ou de la deuxième ligne de contour (18, 21) qui représente le côté extérieur (11, 12) de l'objet (7, 8), par laquelle est représenté un côté intérieur (13, 14) de l'objet (7, 8) faisant face à l'emplacement de stationnement (3), et l'au moins une troisième ligne de contour (18, 21) est déterminée comme une délimitation latérale (15, 16) de l'emplacement de stationnement (3) qui s'étend dans la direction de profondeur (T) de l'emplacement de stationnement (3).

3. Procédé selon la revendication 2, **caractérisé en ce qu'**une valeur entre 1,55 m et 2,50 m, notamment de 1,85 m est déterminée en tant que valeur de translation (23) prédéterminée.

4. Procédé selon la revendication 2 ou 3, **caractérisé en ce que** dans le cas où les points de contour (17, 20) sont acquis au niveau du côté extérieur (11, 12) pour au moins l'un des objets (7, 8), des troisièmes points de contour (28) au niveau d'un côté avant (29) qui fait face au véhicule automobile (1) sont déterminés pour cet objet (7, 8), une longueur du côté avant (29) de l'objet (8) est déterminée à l'aide des troisièmes points de contour (28) et la valeur de translation (23) est déterminée en tant que la longueur du côté avant (29).

5. Procédé selon l'une des revendications 2 à 4, **caractérisé en ce qu'**une largeur (b) dépendante de la direction de profondeur de l'emplacement de stationnement (3) est déterminée à l'aide d'une position dans l'espace des lignes de contour (18, 22) représentant les délimitations latérales (15, 16) de l'emplacement de stationnement (3).

6. Procédé selon l'une des revendications 2 à 5, **caractérisé en ce qu'**une profondeur de l'emplacement de stationnement (3) est déterminée à l'aide d'une longueur de la première ligne de contour (18) et/ou de la deuxième ligne de contour (21) et/ou de la troisième ligne de contour (22).

7. Procédé selon l'une des revendications précédentes, **caractérisé en ce que** les points de contour (17, 20) sont acquis au moyen d'au moins un capteur radar et/ou d'au moins un capteur lidar et/ou d'au moins une caméra du dispositif détecteur (4) du véhicule automobile (1).

8. Système d'assistance au stationnement (2) pour un véhicule automobile (1) destiné à assister un conducteur du véhicule automobile (1) lors de l'entrée en stationnement dans un emplacement de stationnement (3) délimité par deux objets (7, 8), possédant un dispositif détecteur (4) destiné à acquérir des points de contour des objets (7, 8) pendant un passage (F) du véhicule automobile (1) au niveau de l'emplacement de stationnement (3) et un dispositif de commande (6) destiné à déterminer une orientation de l'emplacement de stationnement (3) par rapport au véhicule automobile (1) à l'aide des points de contour,
- le dispositif de commande (6) étant conçu pour, pour un premier des objets (7), acquérir des premiers points de contour (17) au niveau d'un côté intérieur (13) faisant face à l'emplacement de stationnement (3) et s'étendant le long d'une direction de profondeur (T) de l'emplacement de stationnement (3) et/ou au niveau d'un côté extérieur (11) orienté à l'opposé de l'emplacement de stationnement (3) et s'étendant le long de la direction de profondeur (T) de l'emplacement de stationnement (3), et pour un deuxième des objets (8), acquérir des deuxièmes points de contour (20) au niveau d'un côté extérieur (12) orienté à l'opposé de l'emplacement de stationnement (3) et s'étendant le long de la direction de profondeur (T) de l'emplacement de stationnement (3) et/ou au niveau d'un côté intérieur (14) faisant face à l'emplacement de stationnement (3) et s'étendant le long de la direction de profondeur (T) de l'emplacement de stationnement (3), et
- le dispositif de commande (6) étant conçu pour déterminer une première ligne de contour (18) à l'aide des premiers points de contour (17) et une deuxième ligne de contour (21) à l'aide des deuxièmes points de contour (20), et pour déterminer l'orientation de l'emplacement de stationnement (3) à l'aide d'une position dans l'espace de la première ligne de contour (18) et de la deuxième ligne de contour (21), **caractérisé en ce que** le dispositif de commande (6) est en outre conçu pour, dans le cas où les points de contour (17, 20) sont acquis au niveau du côté extérieur (11, 12) pour au moins l'un des objets (7, 8), déterminer une longueur (L) de la première et/ou de la deuxième ligne de contour (18, 21) qui représente le côté extérieur (11, 12) et ne déterminer l'orientation de l'emplacement de stationnement (3) à l'aide de la première et de la deuxième ligne de contour (18, 21) que si la longueur (L) de la première et/ou de la deuxième ligne de contour (18, 21) qui représente le côté extérieur (11, 12) dépasse une valeur de seuil prédéterminée.

9. Système d'assistance au stationnement (2) selon la revendication 8, **caractérisé en ce que** le dispositif de commande (6) est conçu pour déterminer une trajectoire d'entrée en stationnement pour le véhicule automobile (1) dans l'emplacement de stationnement (3) en tenant compte de l'orientation de l'emplacement de stationnement (3).

10. Véhicule automobile (1) équipé d'un système d'assistance au stationnement (2) selon la revendication 8 ou 9.
